**Europäisches Patentamt**

**European Patent Office**

**Office européen des brevets**

(11) Veröffentlichungsnummer: **0 278 228 B1**

(12) **EUROPÄISCHE PATENTSCHRIFT**

(45) Veröffentlichungstag der Patentschrift: **28.04.93**

(21) Anmeldenummer: **88100239.8**

(22) Anmeldetag: **11.01.88**

(51) Int. Cl.⁵: **B60T 13/58**, B60T 13/68

(54) **Elektro-pneumatische Bremsanlage für Zugfahrzeuge.**

(30) Priorität: **06.02.87 DE 3703639**

(43) Veröffentlichungstag der Anmeldung:
**17.08.88 Patentblatt 88/33**

(45) Bekanntmachung des Hinweises auf die
Patenterteilung:
**28.04.93 Patentblatt 93/17**

(84) Benannte Vertragsstaaten:
**DE FR GB IT SE**

(56) Entgegenhaltungen:
**EP-A- 0 199 895      EP-A- 0 205 928**
**DE-A- 3 344 252      DE-A- 3 346 919**
**DE-A- 3 506 418      FR-A- 2 591 979**

(73) Patentinhaber: **ROBERT BOSCH GMBH**
**Postfach 30 02 20**
**W-7000 Stuttgart 30(DE)**

(72) Erfinder: **Stumpe, Werner, Dipl.-Ing.**
**Goerdelerstrasse 10**
**W-7014 Kornwestheim(DE)**

## Beschreibung

Stand der Technik

Die Erfindung geht aus von einer elektro-pneumatischen Bremsanlage für Zugfahrzeuge, wie Lastkraftwagen oder Sattelzugmaschinen, der im Oberbegriff des Anspruchs 1 definierten Gattung.

Bei solchen Bremsanlagen hat die Notbremsauslösevorrichtung die Aufgabe, bei einer Störung in der Bremsanlage, z.B. bei einer Unterbrechung der elektrischen und/oder pneumatischen Bremsleitung zum Anhänger, die Verbindung zwischen Vorratskupplungskopf und Druckluftspeicher abzusperren und die Vorratsleitung zur Anhängerbremseinrichtung schlagartig zu entlüften. Durch den damit in der Vorratsleitung auftretenden Druckabfall wird ein in der Anhängerbremseinrichtung vorhandenes Notbremsventil geschaltet, das eine undosierte Notbremsung des Anhängers durch Belüften der Anhänger-Radbremszylinder auslöst.

Die verschiedenen, mit einem Zugfahrzeug zu koppelnden Anhänger weisen hinsichtlich ihrer Bremseinrichtung einen unterschiedlichen Ausrüstungsstand auf. Neben der konventionellen,rein pneumatisch steuerbaren Bremseinrichtung kann der Anhänger ein Antiblockiersystem besitzen (DE-OS 32 07 793). Ferner kann die Anhängerbremseinrichtung sowohl pneumatisch als auch elektrisch steuerbar sein, wozu neben den beiden pneumatischen Verbindungsleitungen zwischen Zugfahrzeug und Anhänger beim Ankuppeln des Anhängers noch eine elektrische Verbindungsleitung herzustellen ist (DE-OS 33 46 919 ). Schließlich können Anhänger neuester Bauart bereits schon mit einer rein elektrisch steuerbaren Anhängerbremseinrichtung ausgerüstet sein. Hier sind beim Ankuppeln des Anhängers nur noch die pneumatische Vorratsleitung an den Vorratskupplungskopf anzuschließen und die elektrische Bremsleitung in den Anschlußstecker einzustecken. Eine pneumatische Bremsleitung ist nicht vorhanden, so daß der Bremskupplungskopf des Zugfahrzeugs nicht belegt wird. Da das Zugfahrzeug den jeweiligen Ausrüstungsgrad des angekuppelten Anhängers bezüglich seiner Bremseinrichtung nicht kennt, wird auch eine nicht gekuppelte Bremsleitung - da nicht vorhanden - als Fehler in der Bremsverbindung interpretiert und eine Notbremsung ausgelöst. Beim Ankuppeln von Anhängern mit unterschiedlichem Ausrüstungsstand ist der Fahrer daher gezwungen, auf die Art der Anhängerbremseinrichtung abgestimmte spezifischen Maßnahmen zu treffen, um solche Notbremsauslösungen zu unterbinden. Sind alle elektrischen und pneumatischen Verbindungsleitungen gesteckt und wird eine davon unterbrochen, so führt z.B. der Ausfall der elektrischen Bremsleitung zu einer Notbremsung, obwohl der Anhänger pneumatisch ordnungsgemäß gebremst werden könnte.

Vorteile der Erfindung

Die erfindungsgemäße Bremsanlage mit den kennzeichnenden Merkmalen des Anspruchs 1 hat den Vorteil, daß nach Ankuppeln eines beliebigen Anhängers oder Sattelaufliegers die Bremsanlage des Zugfahrzeugs den Ausrüstungsstand der Anhängerbremseinrichtung kennt und somit ein Notbremsprogramm nur dann einleitet, wenn tatsächlich die Funktionsbereitschaft der Anhängerbremseinrichtung nicht mehr gegeben ist. Durch die anhängerseitigen Kennsignale kann erkannt werden, ob z.B. eine der pneumatischen und elektrischen Bremsleitungen nicht gesteckt ist, da sie in der Anhängerbremseinrichtung nicht vorhanden ist, oder ob die Bremsleitung gerissen ist. Nur im letzten Fall wird eine Notbremsauslösung gestartet. Bei elektrisch und pneumatisch steuerbaren Anhängerbremseinrichtungen, bei welchen beide Bremsleitungen gesteckt sind, hat meist die elektrische Ansteuerung den Vorrang Bei Unterbrechung der elektrischen Bremsleitung kann wahlweise die Notbremsung gestartet oder aber mit der pneumatischen Ansteuerung der Fahrbetrieb fortgesetzt werden, bis eine Unterbrechung auch der pneumatischen Bremsleitung zuverlässig zu einer undosierten Notbremsung des Anhängers führt.

Durch die in den weiteren Ansprüchen aufgeführten Maßnahmen sind vorteilhafte Weiterbildungen und Verbesserungen der im Anspruch 1 angegebenen Bremsanlage möglich.

Eine vorteilhafte Ausführungsform der Erfindung ergibt sich dabei aus Anspruch 2 und Anspruch 3. Durch diese Maßnahme werden beim notwendigen Anschließen der Bremsleitungen ohne zusätzliche Handgriffe des Fahrers automatisch die Kennsignale zur Identifizierung der Anhängerbremseinrichtung generiert. Ist die Anhängerbremseinrichtung elektrisch steuerbar, so wird neben der bei allen Anhängerbremseinrichtungen immer vorhandenen und mit dem Vorratskupplungskopf zu verbindenden Vorratsleitung nur eine elektrische Bremsleitung vorhanden sein, die zu stecken ist. Die durch Stecken der elektrischen Bremsleitung entstehenden Kennsignale signalisieren die elektrische Anhängerbremseinrichtung. Ist die Anhängerbremseinrichtung pneumatisch steuerbar, so wird nur eine pneumatische Bremsleitung vorhanden sein. Das Anschließen dieser Bremsleitung an den Bremskupplungskopf signalisiert der Notbremsauslösevorrichtung die pneumatisch steuerbare Anhängerbremseinrichtung. Die Kennsignale werden bei jeder Bremspedalbetätigung generiert, wobei der in den Bremskupplungskopf eingesteuerte Bremsdruck das Kennsignal für eine pneumatisch steuerbare Bremseinrichtung und der entlüftete Bremskupplungskopf das Kennsignal für eine nicht vorhandene pneumatische Bremsleitung bildet. Läßt sich die Anhängerbremseinrichtung sowohl elektrisch als auch pneumatisch steuern, so sind alle Bremsleitungen vorhanden und an das Zugfahrzeug anzuschließen. Damit werden der Zugwagenbremsanlage die beiden Möglichkeiten der Ansteuerung der Anhängerbremseinrichtung signalisiert.

Eine vorteilhafte Ausführungsform der Erfindung ergibt sich auch aus Anspruch 5, insbesondere in Verbindung mit Anspruch 6. Bei dieser einfachen Ausführungsform können Anhänger mit einer elektrisch und Anhänger mit einer pneumatisch steuerbaren Anhängerbremseinrichtung wahlweise gekuppelt werden. Die Steuerelektronik erkennt durch Belegen des Anschlußsteckers, ob die angekuppelte Anhängerbremseinrichtung elektrisch oder pneumatisch steuerbar ist. Im ersten Fall wird bei Ausbleiben eines Bremssignals auf der elektrischen Bremsleitung die Notbremsung ausgelöst, im anderen Falle nicht. Bei rein pneumatisch steuerbarer Anhängerbremseinrichtung, also bei nicht belegtem Anschlußstecker, ist bei Bruch der pneumatischen Bremsleitung die Notentlüftungsfunktion des bekannten Anhängersteuerventils wirksam.

Eine vorteilhafte Ausführungsform der Erfindung ergibt sich auch aus Anspruch 7. Durch diese Maßnahmen ist eine zusätzliche Sicherheit eingebaut. Das Steuersignal für das 3/2-Wegemagnetventil zur Verhinderung einer Notbremsauslösung bei intakter elektrischer Bremsverbindung wird erst freigegeben, wenn das von der Steuerelektronik an den Anschlußstecker ausgegebene Bremssignal auf zeitliche Koinzidenz mit dem Ausgangssignal des Bremswertgebers überprüft worden ist. Ist diese Synchronisation nicht gegeben, so wird das Notbremsprogramm gestartet.

Die Ausführungsformen der Erfindung gemäß den Ansprüchen 8 - 13 sind alle so konzipiert, daß einerseits eine Notbremsung ausgelöst wird, wenn bei rein pneumatisch gesteuerter Anhängerbremseinrichtung die pneumatische Bremsleitung unterbrochen und bei rein elektrisch gesteuerter Anhängerbremseinrichtung
die elektrische Bremseinleitung unterbrochen oder die Steuerelektronik ausgefallen ist, und andererseits bei elektrisch und pneumatisch steuerbarer Anhängerbremseinrichtung eine Störung im elektrischen Bremskreis noch nicht zu einer Notbremsung führt, sondern der Fahrbetrieb mit der pneumatisch gesteuerten Anhängerbremseinrichtung aufrecht erhalten wird. Erst wenn noch die pneumatische Bremsleitung reißt, wird das Notprogramm gestartet.

Eine vorteilhafte Ausführungsform der Erfindung ergibt sich auch aus den Ansprüchen 10 und 11 und den Ansprüchen 12 und 13. Beide Ausführungsformen stellen hinsichtlich der Fertigungskosten sehr preiswerte Lösungen dar. Als pneumatisch gesteuertes Umschaltventil kann das von herkömmlichen Anhängersteuerventilen bekannte Drosselventil verwendet werden. Dann ist nur noch ein einfaches Magnetventil in der Verbindung zwischen Anhängersteuerventil und Bremskupplungskopf bzw. in einem Bypaß zwischen Anhängersteuerventil und Rückleitungsanschluß des nach Art eines Vorratskupplungskopfes ausgebildeten Bremskupplungskopfes erforderlich. Dieses Magnetventil ist leicht in das herkömmliche Anhängersteuerventil integrierbar.

Eine vorteilhafte Ausführungsform der Erfindung ergibt sich auch aus Anspruch 14. Durch die Übermittlung eines Kenncodes vom Anhänger zum Zugfahrzeug kann zusätzlich der Ausbaugrad einer elektrisch steuerbaren Anhängerbremseinrichtung, z.B. rein elektrische Bremsung oder elektrische Bremsung mit pneumatischem Rückhaltekreis, in der Zugwagenbremsanlage berücksichtigt und bei Fehlern eine gezielte Notbremsauslösung von der Zugwagenbremsanlage durchgeführt werden. Solange die Signalleitung geschlossen ist, bleibt die Kennung des Anhängers im Zugfahrzeug erhalten.


Zeichnung


Die Erfindung ist anhand von in der Zeichnung dargestellten Ausführungsbeispielen in der nachfolgenden Beschreibung näher erläutert. Es zeigen:

Fig. 1        ein Blockschaltbild einer elektropneumatischen Bremsanlage eines Zugwagens zum Ankoppeln von Anhängern mit Anhängerbremseinrichtung beliebigen Ausrüstungsgrades,

Fig. 2        einen Ausschnitt des Blockschaltbildes in Fig. 1 mit detaillierter Darstellung der Steuerelektronik und des Notentlüftungsventils in Fig. 1,

Fig. 3 bis 5        ausschnittweise ein Blockschaltbild einer Zugwagenbremsanlage gemäß einem zweiten, dritten und vierten Ausführungsbeispiel,

Fig. 6        eine schematische Darstellung einer Zugwagenbremsanlage gemäß einem fünften Ausführungsbeispiel und einer Anhängerbremseinrichtung.

Beschreibung der Ausführungsbeispiele

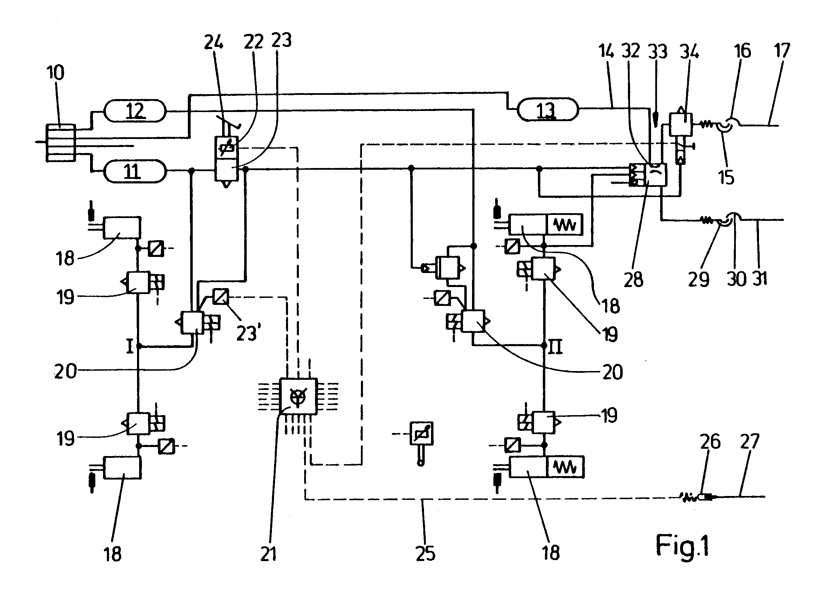

Die in Fig. 1 schematisch dargestellte Mehrkreis-Betriebsbremsanlage für einen Zugwagen weist einen nicht dargestellten Kompressor mit Druckregler und ein diesem nachgeschaltetes Vierkreis-Schutzventil 10 auf. Über das Vierkreis-Schutzventil 10 werden die Druckluftspeicher 11 - 13 vom Kompressor mit Druckluft auf Betriebsdruck aufgeladen. Die Druckluftspeicher 11 und 12 versorgen dabei jeweils einen Betriebsbremskreise I bzw.II,während der Druckluftspeicher 13 mit einer Druckluftversorgungsleitung 14 für eine Anhängerbremseinrichtung eines an den Zugwagen angekoppelten Anhängers in Verbindung steht. Die Druckluftversorgungsleitung 14 mündet in einem zugwagenseitigen Vorratskupplungskopf 15, an dem bei angekoppeltem Anhänger ein entsprechender Kupplungskopf 16 des Anhängers angeschlossen wird, der mit einer Vorratsleitung 17 der Anhängerbremseinrichtung verbunden ist. Über die Druckluftversorgungsleitung 14, den Vorratskupplungskopf 15, den anhängerseitigen Kupplungskopf 16 und die anhängerseitige Vorratsleitung 17 wird ein Vorratsspeicher der Anhängerbremseinrichtung aus dem Druckluftspeicher 13 mit Druckluft versorgt. Ein möglicher Aufbau einer Anhängerbremseinrichtung ist in der DE-OS 32 07 793 und in der DE-OS 33 46 919 beschrieben.

In jedem der beiden Betriebsbremskreise I,II sind zwei Radbremszylinder 18 angeordnet, die jeweils von einem Drucksteuerventil 19 angesteuert werden. Jeweils zwei Drucksteuerventile 19 sind über ein Vorsteuerventil 20 mit dem dem Bremskreis I bzw. II zugehörigen Druckluftspeicher 11 bzw. 12 verbunden. Bei entsprechender Ansteuerung der Vorsteuerventile 20 und der Drucksteuerventile 19 werden die Radbremszylinder 18 mit Druckluft aus den Druckluftspeichern 11,12 beaufschlagt. Zur Steuerung der Druckluftversorgung der Radbremszylinder 18 in den beiden Bremskreisen I,II sind zwei Betätigungskreise vorgesehen, von welchen der eine ein elektrischer Betätigungskreis mit einer Steuerelektronik 21 und einem mit der Steuerelektronik 21 verbundenen elektrischen Bremswertgeber 22 ist. Der andere Betätigungskreis ist ein pneumatischer Rückhaltekreis mit einem pneumatischen Bremswertgeber 23 in Form eines Drucksteuerventils, das über die Vorsteuerventile 20 bei geöffneten Drucksteuerventilen 19 einen vorgebbaren Bremsdruck in die Radbremszylinder 18 der beiden Bremskreise I und II für die Vorder- und Hinterräder des Zugwagens einsteuert. Der elektrische Bremswertgeber 22 und der pneumatische Bremswertgeber 23 sind voneinander unabhängig mit einem Bremspedal 24 verbunden und geben jeweils ein dem vom Bremspedal 24 zurückgelegten Hub proportionales Ausgangssignal aus.Das pneumatische Bremssignal vom Bremswertgeber 23 wird von einem Meßwertaufnehmer 23′ erfaßt und als elektrisches Signal der Steuerelektronik 21 zugeführt. Von der Steuerelektronik 21 führt eine Bremssignalleitung 25 zu einem elektrischen Anschlußstecker 26. Bei Ankuppeln eines Anhängers mit elektrisch steuerbarer Anhängerbremseinrichtung ist in den Anschlußstecker 26 eine zu der Anhängerbremseinrichtung führende elektrische Bremsleitung 27 einzustecken. Die Steuerelektronik 21 ist nun derart ausgebildet, daß sie bei ungestörten elektrischen Signalwegen zu den Bremswertgebern 22,23′, zum Anschlußstecker 26 und vom Anschlußstek-ker 26 zur Anhängerbremseinrichtung mit jedem elektrischen Ausgangssignal des Bremswertgebers 22 ,23′ ein elektrisches Bremssignal an den Anschlußstecker 26 legt. Ist die Bremssignalleitung 25 unterbrochen oder fällt die Steuerelektronik aus, so wird kein Bremssignal generiert. Bei einer elektrisch steuerbaren Anhängerbremseinrichtung bewirkt dieses über die elektrische Bremsleitung 27 anhängerseitig anstehende elektrische Bremssignal eine entsprechend dosierte Anhängerbremsung. Die Wirkungsweise der Zugwagenbremse in Verbindung mit der Steuerelektronik 21 des elektrischen Betätigungskreises und in Verbindung mit dem pneumatischen Rückhaltekreis ist bekannt und z.B. auch in der DE-OS 33 44 252 beschrieben.

Die den Druckluftspeicher 13 mit dem Vorratskupplungskopf 15 verbindende Druckluftversorgungsleitung 14 ist über ein bekanntes Anhängersteuerventil 28 geführt, das drei pneumatische Steuereingänge aufweist. Von den drei pneumatischen Steuereingängen ist einer mit dem pneumatischen Bremswertgeber 23, einer mit dem Bremskreis II und einer mit einer nicht dargestellten Feststellbremse verbunden. Das Anhängersteuerventil 28 verbindet in bekannter Weise je nach Schaltstellung einen Bremskupplungskopfkopf 29 zum Anschließen einer mit einem entsprechenden Kupplungskopf 30 versehen, zur Anhänger-bremseinrichtung führenden pneumatischen Bremsleitung 31 mit dem Druckluftspeicher 13 oder entlüftet diesen. Bei Bremspedalbetätigung erzeugt der pneumatische Bremswertgeber 23 ein dem Hub des Bremspedals 24 proportionales Bremssignal, das an den Steuereingang des Anhängerbremsventils 28 gelangt und hier die Einsteuerung eines entsprechenden Bremssteuerdrucks in den Bremskupplungskopf 29 bewirkt. Dieser Bremssteuerdruck wird über die pneumatische Bremsleitung 31 zur Anhängerbremseinrichtung übertragen, die eine dosierte Anhängerbremsung durchführt. In jeder Schaltstellung des Anhängersteuerventils 28 ist dabei der Vorratskupplungskopf 15 über die Druckluftversorgungsleitung 14 mit dem Druckluftspeicher 13 verbunden. Die Verbindung erfolgt dabei über eine schematisch dargestellte Drossel 32. Für den Fall, daß eine der zur Anhängerbremseinrichtung führenden Bremsleitungen 27 oder 31 defekt ist und ein dosiertes Bremsen des Anhängers über diese Bremsleitungen nicht mehr möglich ist, ist eine Notbremsauslösevorrichtung 33 vorgesehen, die im Falle von Bremsleitungsunterbrechungen durch die bei Bremspedalbetätigung einerseits von der Steuerelektronik 21 und andererseits vom pneumatisch Bremswertgeber 23 generierten Bremssignale aktiviert wird. Die Notbremsauslösevorrichtung 33 wirkt dabei in der Weise, daß unter gleichzeitiger Absperrung des Druckluftspeichers 13 der Vorratskupplungskopf 15 und damit die zur Anhängerbremseinrichtung führende Vorratsleitung 17 schlagartig entlüftet wird. Der schlagartige Druckabfall in der Vorratsleitung 17 schaltet ein Notbremsventil in der Anhängerbremseinrichtung um, das eine undosierte Bremsung der Anhängerbremseinrichtung auslöst.

Die Notbremsauslösevorrichtung 33 weist ein elektrisch und pneumatisch steuerbares Notentlüftungsventil 34 auf, dessen pneumatischer Steuereingang mit dem pneumatischen Bremswertgeber 23 und dessen elektrischer Steuereingang mit der Steuerelektronik 21 verbunden ist. Wird das Notentlüftungsventil 34 aktiviert, so sperrt es einerseits den Druckluftspeicher 13 ab und entlüftet andererseits den Vorratskupplungskopf 15. Außerdem bildet das Anhängersteuerventil 28 einen Teil der Notbremsauslösevorrichtung 33. In bekannter Weise läßt das bei Bremspedalbetätigung umgeschaltete Anhängersteuerventil 28 Druckluft von der Druckluftversorgungsleitung 14 in den Bremskupplungskopf 29 einströmen. Ist die pneumatische Bremsleitung 31 gerissen, so tritt an der Drossel 32 ein Druckabfall auf. Dieser Druckabfall bewirkt über die Vorratsleitung 17 die Auslösung der Notbremsung in der Anhängerbremseinrichtung.

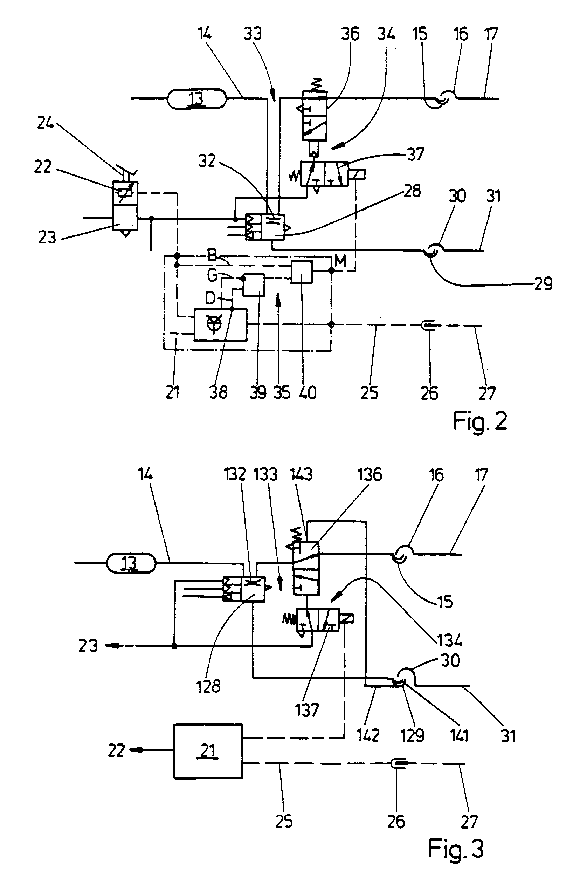

An die mit der vorstehend beschriebenen Bremsanlage ausgerüsteten Zugwagen können alle Anhänger ungeachtet des Ausrüstungsgrades ihrer Bremseinrichtung angekuppelt werden. Die Anhängerbremseinrichtung kann sowohl pneumatisch oder elektrisch als auch elektrisch und pneumatisch steuerbar sein. Damit eine aufgrund des Ausrüstungsgrades fehlende Bremsleitung nicht mit einer gerissenen Bremsleitung verwechselt und eine ungewollte Notbremsung des Anhängers ausgelöst wird, sind in der Zugwagenbremsanlage Mittel vorgesehen, welche Kennsignale generieren, die die Anhängerbremseinrichtung als pneumatisch und/oder elektrisch steuerbar ausweisen. Diese Mittel werden einmal von dem Anschlußstecker 26 gebildet, der Kennsignale ausgibt, die eine eingesteckte bzw. eine nicht eingesteckte Bremsleitung 27 charakterisieren. Z.B. wird über die Bremssignalleitung 25 oder einen gesonderten Signalweg der Steuerelektronik 21 ein H-Signal zugeführt, wenn die Bremsleitung 27 in den Anschlußstecker 26 eingesteckt ist. Ist dies nicht der Fall, so erhält die Steuerelektronik 21 ein L-Signal. Die Steuerelektronik 21 enthält eine Logik 35, in welcher nunmehr diese elektrischen Kennsignale mit den elektrischen Bremssignalen verknüpft werden (Fig. 2). Mit dem Verknüpfungsergebnis wird das Notentlüftungsventil 34 gesteuert. Die Kennsignalgenerierungsmittel werden zum anderen auch von dem Bremskupplungskopf 29 gebildet, der bei jeder Bremspedalbetätigung ein Kennsignal generiert, das eine angeschlossene pneumatische Bremsleitung 31 bzw. eine nicht angeschlossene pneumatische Bremsleitung 31 charakterisiert. Hierauf wird in Verbindung mit Fig. 3 noch näher eingegangen.

In Fig. 2 ist das Notentlüftungsventil 34 und die Logik 35 in der Steuerelektronik 21 im Detail dargestellt. Das Notentlüftungsventil 34 setzt sich zusammen aus einem pneumatisch gesteuerten 3/2-Wegeventil 36 mit Federrückstellung und einem 3/2-Wegemagnetventil 37 mit Federrückstellung. Von den drei Arbeitsanschlüssen des 3/2-Wegeventils 36 sind zwei in die Druckluftversorgungsleitung 14 derart eingeschaltet, daß der eine mit dem Vorratskupplungskopf 15 und der andere mit dem Anhängersteuerventil 28 verbunden ist. Der dritte Arbeitsanschluß ist entlüftet. Von den drei Arbeitsanschlüssen des 3/2-Wegemagnetvils 37 ist einer mit dem pneumatischen Bremswertgeber 23 und der andere mit dem pneumatischen Steuereingang des 3/2-Wegeventils 36 verbunden, während der dritte Arbeitsanschluß wiederum entlüftet ist. Der elektrische Steuereingang des 3/2-Wegemagnetventils 37 ist mit der Steuerelektronik 21 verbunden.

Die Steuerelektronik 21 weist einen Anschluß 38 auf, dessen Potential für die Dauer eines elektrischen Bremssignals von logisch L auf logisch H wechselt. Dieses durch den Potentialwechsel generierte Signal ist in Fig. 2 mit D bezeichnet. Das vom Anschlußstecker 26 generierte Kennsignal ist mit G bezeichnet. Es ist logisch H bei gesteckter Bremsleitung 27 und logisch L bei nicht gesteckter Bremsleitung 27. Die Logik 35 weist ein OR-Gatter 39 und ein AND-Gatter 40 auf. Die beiden Eingänge des OR-Gatters 39 sind mit den beiden Signalen G und D belegt. Von den Eingängen des And-Gatters 40 ist der eine Eingang mit dem Ausgang des OR-Gatters 39 und der andere Eingang mit dem Ausgang des elektrischen Bremswertgebers 22 verbunden. Dessen Ausgangssignal ist mit B bezeichnet und nimmt bei Bremspedalbetätigung logisch H an. Der Ausgang des AND-Gatters 40 ist mit dem elektrischen Steuereingang des 3/2-Wegemagnetventils 37 verbunden. Zu beachten ist, daß das Kennsignal G negiert an den Eingang des OR-Gatters 39 gelegt ist. Die Wahrheitstabelle der Logik 35 ist wie folgt:

| $\overline{G}$ | D | Ausgang 39 | B | M | Nr. |
|---|---|---|---|---|---|
| L | H | H | H | H | 1. |
| L | L | L | H | L | 2. |
| H | L | H | H | H | 3. |

Im Falle 1. ist die elektrische Bremsleitung 27 gesteckt und die Signalwege zwischen Steuerelektronik 21 und Anschlußstecker 26 und Anhängerbremseinrichtung ungestört, so daß mit jedem Ausgangssignal des Bremswertgebers 22 die Steuerelektronik ein Bremssignal und ein Signal D = H generiert.An dem mit dem Steuereingang des 3/2-Wegemagnetventils 37 verbundenen Ausgang tritt ein Schaltsignal M = H auf und das 3/2-Wegemagnetventil 37 wird umgeschaltet. Im Falle 3. ist die elektrische Bremsleitung 27 nicht gesteckt. An dem Eingang des OR-Gatters 39 liegt das negierte Kennsignal $\overline{G}$ = H. Am Ausgang der Steuerelektronik 21 tritt wiederum das Schaltsignal M = H auf, das 3/2-Wegemagnetventil 37 wird geschaltet. Im Falle 2. ist die Bremsleitung 27 gesteckt aber der Signalweg von der Steuerelektronik 21 zur Anhängertremseinrichtung gestört, so daß die Steuerelektronik 21 kein Bremssignal generiert. Damit nimmt das Signal D = L an. Am Ausgang der Steuerelektronik tritt kein Schaltsignal auf (M = L). Das 3/2-Wegemagnetventil 37 wird nicht geschaltet. Damit gelangt das von dem pneumatischen Bremswertgeber 23 generierte pneumatische Bremssignal an den Steuereingang des 3/2-Wegeventils 36. Dieses wird umgeschaltet und entlüftet in seiner Arbeitsstellung bei gleichzeitiger Sperrung der Verbindung zwischen Druckluftspeicher 13 und Vorratskupplungskopf 15 die Vorratsleitung 17 zur Anhängerbremseinrichtung. Dieser schlagartige Druckabfall in der Anhängerbremseinleitung 17 schaltet - wie bereits erwähnt - ein Notbremsventil in der Anhängerbremseinrichtung, wodurch eine undosierte Anhängerbremsung ausgelöst wird. Bei defekter elektrischer Bremsleitung 27 ist damit die Notbremsung des Anhängers sichergestellt. In den anderen beiden Fällen 1. und 3., in welcher jeweils das 3/2-Wegemagnetventil 37 geschaltet wird, wird der Steuereingang des 3/2-Wegeventils 36 entlüftet und der Anschluß zum pneumatischen Bremswertgeber 23 gesperrt, so daß die Bremspedalbetätigung kein Umschalten des 3/2-Wegeventils 36 bewirken kann.

Ist der Anhänger mit einer konventionellen pneumatisch steuerbaren Anhängerbremseinrichtung ausgerüstet, so wird beim Ankuppeln des Anhängers die Bremsleitung 27 nicht gesteckt. Das von dem Anschlußstecker 26 ausgegebene Kennsignal ist G = L. Dieses Kennsignal liegt negiert an dem einen Eingang des OR-Gatters 39 (Fall 3.). Bei Bremspedalbetätigung wird - wie bereits erwähnt - das 3/2-Wegemagnetventil 37 geschaltet und damit eine Umschaltung des 3/2-Wegeventils 36 verhindert. Der Anhänger wird durch den in die Bremsleitung 31 eingesteuerten Bremssteuerdruck dosiert gebremst. Ist die pneumatische Bremsleitung 31 unterbrochen, so tritt die Notauslösefunktion des Anhängersteuerventils 28, wie bereits beschrieben, ein.

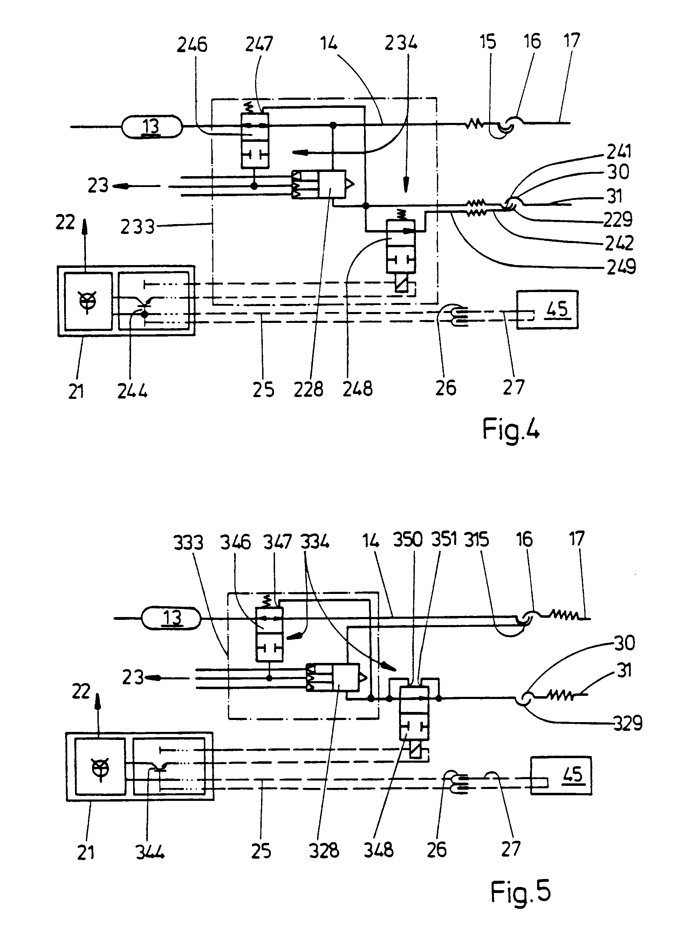

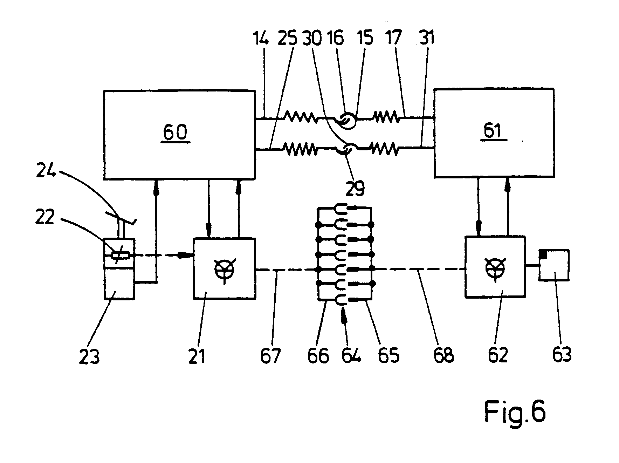

Die in Fig. 3 ausschnittweise dargestellte modifizierte Zugwagenbremsanlage stimmt mit der vorstehend beschriebenen überein mit dem folgenden Unterschied: Der Bremskupplungskopf 129 ist nach Art eines Lkw-Vorratskupplungskopfes ausgebildet, d.h. er weist einen Bremsleitungsanschluß 141 und einen Rückleitungsanschluß 142 und ein nicht dargestelltes Ventil auf, das bei Anschließen der pneumatischen Bremsleitung 31 automatisch aufgestoßen wird. Das Ventil sperrt in seiner Schließstellung den Bremsleitungsanschluß 141 ab und entlüftet den Rückleitungsanschluß 142, während es in seiner Offenstellung den Bremsleitungsanschluß 141 öffnet und den Rückleitungsanschluß 142 mit dem Bremsleitungsanschluß 141 verbindet. Das 3/2-Wegeventil 136 des Notentlüftungsventils 134 weist noch zusätzlich einen pneumatischen Rücksetzeingang 143 auf, der mit dem Rückleitungsanschluß 142 verbunden ist. Der elektrische Steuereingang des 3/2-Wegemagnetventils 137 ist wie in Fig. 2 mit der Steuerelektronik 21 verbunden. Dabei kann wiederum in der Steuerelektronik die Logik 35 vorgesehen sein, die Steuerelektronik 21 kann aber auch wie in Fig. 4 und 5 ausgebildet sein, wo mit jedem von der Steuerelektronik 21 an den Anschlußstecker 26 gelegtem Bremssignal ein Schaltsignal an den Steuereingang des 3/2-Wegemagnetventils 137 gelangt.

Bei dieser Zugwagenbremsanlage kann jeder Anhänger mit beliebiger Anhängerbremseinrichtung gekuppelt werden, wobei in jedem Fall die Funktion der Notbremsauslösevorrichtung 133 gewährleistet ist. Bei pneumatisch steuerbarem Anhänger wird der Anschlußstecker 26 nicht mit einer elektrischen Bremsleitung 27 belegt. Der Anschlußstecker 26 gibt an die Steuerelektronik 21 ein die Nichtbelegung kennzeichnendes Kennsignal, was zur Folge hat, daß das 3/2-Wegemagnetventil 137 bei keiner Bremspedalbetätigung geschaltet wird. Neben der Vorratsleitung 17 ist bei diesem Anhänger auch die pneumatische Bremsleitung 31 an das Zugfahrzeug anzuschließen. Durch die Belegung des Bremskupplungskopfes 129 mit der pneumatischen Bremsleitung 31 wird das Ventil im Bremskupplungskopf 129 aufgestoßen und der Bremsleitungsanschluß 141 mit dem Rückleitungsanschluß 142 verbunden. Bei jeder Bremspedalbetätigung wird von dem Anhängersteuerventil 128 ein Bremssteuerdruck in dem Bremskupplungskopf 129 eingesteuert. Dieser Bremssteuerdruck liegt über den Rückleitungsanschluß 142 an dem pneumatischen Rücksetzeingang 143 des 3/2-Wegeventils 136 und blockiert dessen pneumatischen Steuereingang, so daß das über das ungeschaltete 3/2-Wegemagnetventil 137 an den pneumatischen Steuereingang gelangende pneumatische Bremssignal eine Umschaltung des 3/2-Wegeventils 136 nicht bewirken kann. Dieser an dem pneumatischen Rücksetzeingang des 3/2-Wegeventils 136 anliegende Bremssteuerdruck kann als pneumatisches Kennsignal aufgefaßt werden, das in der Notbremsauslösevorrichtung 133 mit dem vom Bremswertgeber 23 kommenden pneumatischen Bremssignal verknüpft wird. Dieses Kennsignal wird bei Bremspedalbetätigung nur dann generiert, wenn an dem Bremskupplungskopf die pneumatische Bremsleitung 31 angeschlossen ist. Das pneumatische Kennsignal meldet damit der Notbremsauslösevorrichtung 133 der Zugwagenbremsanlage die pneumatische Steuerung der Anhängerbremseinrichtung. Ist die pneumatische Bremsleitung 31 defekt oder gerissen, so wird in dem Bremskupplungskopf 129 kein pneumatischer Bremssteuerdruck aufgebaut. Dieser liegt damit auch nicht an dem Rücksetzeingang 143 des 3/2-Wegeventils 136. Das an den Steuereingang des 3/2-Wegeventils 136 gelangende pneumatische Bremssignal schaltet das 3/2-Wegeventil 136 um. Damit wird der Druckluftspeicher 13 abgesperrt und die Vorratsleitung 17 zur Anhängerbremseinrichtung schlagartig entlüftet, wodurch, wie bereits beschrieben, eine undosierte Anhängerbremsung gestartet wird.

Ist der angekuppelte Anhänger mit einer elektrisch steuerbaren Anhängerbremseinrichtung versehen, so ist die elektrische Bremsleitung 27 des Anhängers in den Anschlußstecker 26 einzustecken. Dadurch wird im Anschlußstecker 26 das Kennsignal generiert, das die Anhängerbremseinrichtung als elektrisch steuerbar charakterisiert. Der Bremskupplungskopf 129 wird nicht belegt. Damit wird das Ventil des Bremskupplungskopfes 129 nicht aufgestoßen,und der Rückleitungsanschluß 142 bleibt entlüftet, wodurch auch der pneumatische Rücksetzeingang 143 des 3/2-Wegeventils 136 wirkungslos ist. Im Bremskupplungskopf 129 wird damit der Notbremsauslösungsvorrichtung 133 ein Kennsignal generiert, daß die Anhängerbremseinrichtung als nicht pneumatisch steuerbar charakterisiert. Bei intakter elektrischer Bremsleitung 27 generiert die Steuerelektronik 21 mit jeder Bremspedalbetätigung ein Bremssignal, und für die Dauer eines Bremssignals liegt ein Schaltsignal an dem elektrischen Steuereingang des 3/2-Wegemagnetventils 137. Dieses schaltet um und trennt den pneumatischen Bremswertgeber 23 von dem Steuereingang des 3/2-Wegeventils 136. Das über die elektrische Bremsleitung 27 an die Anhängerbremseinrichtung gelangende Bremssignal bewirkt dort eine dosierte Anhängerbremsung. Ist hingegen die elektrische Bremsleitung 27 unterbrochen oder fällt die Steuerelektronik 21 aus, so generiert letztere kein Bremssignal, wodurch auch kein Schaltsignal an den Steuereingang des 3/2-Wegemagnetventils 137 gelangt. Damit gelangt das von dem pneumatischen Bremswertgeber 23 bei Bremspedalbetätigung generierte pneumatische Bremssignal an den Steuereingang des 3/2-Wegeventils 136 und schaltet diesesum. Die Vorratsleitung 17 wird unter Absperrung des Druckluftspeichers 13 schlagartig entlüftet und die Notbremsung des Anhängers ausgelöst.

Ist der anzukuppelnde Anhänger mit einer elektrisch und pneumatisch steuerbaren Anhängerbremseinrichtung ausgerüstet, so ist neben der immer an den Vorratskupplungskopf 15 anzuschließenden Vorratsleitung 17 auch der Bremskupplungskopf 129 und der Anschlußstecker 26 mit der pneumatisch bzw. elektrischen Bremsleitung 31 bzw. 27 zu belegen. Solange alle Bremsleitungen 27,31 in Ordnung sind, wird bei jeder Bremspedalbetätigung von der Steuerelektronik 21 ein elektrisches Bremssignal und für die Dauer des elektrischen Bremssignals ein Schaltsignal für das 3/2-Wegemagnetventil 137 generiert. Letzteres schaltet um und blockiert den pneumatischen Steuereingang des 3/2-Wegeventils 136, so daß das von dem pneumatischen Bremswertgeber 23 generierte pneumatische Bremssignal nicht zu einer Umschaltung des 3/2-Wegeventils 136 führen kann. Das Anhängersteuerventil 128 steuert wiederum einen Bremssteuerdruck in dem Bremskupplungskopf 129 ein, der über die pneumatische Bremsleitung 31 an die Anhängerbremseinrichtung übertragen wird. Die Anhängerbremseinrichtung wird damit sowohl elektrisch als auch pneumatisch angesteuert, wobei meist die elektrische Ansteuerung den Vorrang hat.

Ist die elektrische Bremsleitung 27 defekt, so generiert die Steuerelektronik 21 bei Bremspedalbetätigung kein elektrisches Bremssignal und damit auch kein elektrisches Schatlsignal für das 3/2-Wegemagnetventil 137. Dieses verbleibt stets in der Fig. 3 gezeigten Grundstellung. Der Ausfall der elektrischen Bremsleitung 27 führt aber noch nicht zu einer Aktivierung der Notbremsauslösevorrichtung 133, da der von dem Anhängersteuerventil 128 bei Bremspedalbetätigung in den Bremskupplungskopf 129 eingesteuerte Bremssteuerdruck an dem Rücksetzeingang 143 des 3/2-Wegeventils 136 liegt und damit eine Umschaltung dieses Ventils durch das über das ungeschaltete 3/2-Wegemagnetventils 137 an den Steuereingang gelangende pneumatische Bremssignal verhindert. Die Anhängerbremseinrichtung wird nunmehr über die pneumatische Bremsleitung 31 angesteuert und dosiert gebremst. Erst wenn die pneumatische Bremsleitung 31 ebenfalls defekt wird, wird eine Notbremsung ausgelöst. In diesem Fall ist der mit dem Bremsleitungsanschluß 141 verbundene Rückleitungsanschluß 142 über die gebrochene pneumatische Bremsleitung entlüftet und der pneumatische Rücksetzeingang 143 des 3/2-Wegeventils 136 wirkungslos. Das bei Bremspedalbetätigung generierte pneumatische Bremssignal gelangt über das ungeschaltete 3/2-Wegemagnetventil 137 an den Steuereingang des 3/2-Wegeventils 136 und schaltet dieses um. Die Schnellentlüftung der Vorratsleitung 17 führt zur Notbremsung durch die Anhängerbremseinrichtung.

In Fig. 4 und 5 sind weitere Varianten einer Zugwagenbremsanlage dargestellt, bei denen ebenfalls,wie bei der Zugwagenbremsanlage in Fig. 3, jeder Anhänger mit beliebiger Anhängerbremseinrichtung angekuppelt werden kann und bei welchen in gleicher Weise im Falle der pneumatisch und elektrisch steuerbaren Anhängerbremseinrichtung bei Defekt der elektrischen Bremssignalleitung der Fahrbetrieb durch pneumatische Steuerung der Anhängerbremseinrichtung aufrecht erhalten wird. Auch bei diesen beiden Zugwagenbremsanlagen wird die Notbremsung erst dann ausgelöst, wenn neben der elektrischen Bremsleitung auch die pneumatische defekt wird.

Bei der Zugwagenbremsanlage in Fig. 4 ist der Bremskupplungskopf 229 in gleicher Weise wie in Fig. 3 ausgebildet. Hier wird also wiederum ein Bremskupplungskopf verwendet, wie er sonst nur als Vorratskupplungskopf bei Lastkraftwagen vorhanden ist. Diese Zugwagenbremsanlage findet bevorzugte Anwendung in einer Sattelzugmaschine, wo hingegen die Zugwagenbremsanlage gemäß Fig. 5 für einen Lastkraftwagen konzipiert ist. In beiden Zugwagenbremsanlagen ist die Steuerelektronik 21 derart ausgebildet, daß sie nur bei intakten elektrischen Bremssignalwegen ein Bremssignal generiert und für die Dauer eines Bremssignals an die Notbremsauslösevorrichtung 233 bzw. 333 ein elektrisches Steuersignal legt. Letzteres kann dadurch bewirkt werden, daß mit jedem von der Steuerelektronik 21 generierten Bremssignal ein Schalttransistor 244 bzw. 344 durchgeschaltet wird, der ein Schaltsignal erzeugt. In Fig. 4 und 5 ist jeweils mit 45 das elektrische Steuergerät der Anhängerbremseinrichtung angedeutet.

Bei der Notbremsauslösevorrichtung 233 in Fig. 4 weist das Notentlüftungsventil 234 ein zwischen Druckluftspeicher 13 und Anhängersteuerventil 228 eingeschaltetes pneumatisches 2/2-Wegeventil 246 mit Federrückstellung und pneumatischem Rücksetzeingang 247 und ein zwischen dem Anhängersteuerventil 228 und dem Bremskupplungskopf 229 eingeschaltetes 2/2-Wegemagnetventil 248 mit Federrückstellung auf. Der eine Arbeitsanschluß des 2/2-Wegemagnetventils 248 ist dabei mit dem Ausgang des Anhängersteuerventils 228 und der andere Arbeitsanschluß mit dem Rückleitungsanschluß 242 verbunden, so daß das 2/2-Wegemagnetventil 248 in einem Bypaß 249 zu der Verbindung zwischen Anhängersteuerventil 228 und Bremsleitungsanschluß 241 des Bremskupplungskopfes 229 eingeschaltet ist. Der Steuereingang des 2/2-Wegemagnetventils 248 ist mit der Steuerelektronik 21 verbunden, so daß - wie bereits erwähnt - mit jedem Bremssignal auf der Bremsleitung 27 an das 2/2-Wegemagnetventil 248 ein Schaltsignal gelangt. Der Steuereingang des 2/2-Wegeventils 246 ist mit dem pneumatischen Bremswertgeber 23 verbunden. Als 2/2-Wegeventil 246 kann das bei herkömmlichen Anhängersteuerventilen vorhandene Drosselventil verwendet werden.

Bei einem angekuppelten Anhänger mit konventioneller pneumatischer Anhängerbremseinrichtung ist neben der Vorratsleitung 17 lediglich die Bremsleitung 31 angeschlossen. Der nicht angeschlossene Anschlußstecker 26 signalisiert der Steuerelektronik 21 eine nicht elektrisch steuerbare Anhängerbremseinrichtung, wodurch der Schalttransistor 244 verriegelt ist und kein Schaltsignal an das 2/2-Wegemagnetventil 248 gelangt. Durch Anschluß der Bremsleitung 31 wird das im Bremskupplungskopf 229 vorhandene Ventil aufgestoßen und der Bremsleitungsanschluß 241 mit dem Rückleitungsanschluß 242 verbunden. Durch den bei jeder Bremspedalbetätigung in den Bremskupplungskopf 229 vom Anhängersteuerventil 228 eingesteuerten Bremssteuerdruck, der ebenfalls an dem Rücksetzeingang 247 des pneumatischen 2/2-Wegeventils 246 anliegt und dessen Steuereingang blockiert, wird der Notbremsauslösevorrichtung 233 die pneumatisch steuerbare Anhängerbremseinrichtung signalisiert. Durch Blockierung des Steuereingangs kann das vom Bremswertgeber 23 generierte pneumatische Bremssignal das 2/2-Wegemagnetventil 246 nicht umschalten. Alle Ventile behalten die in Fig. 4 dargestellte Grundstellung, und die Anhängerbremseinrichtung wird über die pneumatische Bremsleitung 31 angesteuert. Reißt letztere, so wird der Rücksetzeingang 247 des 2/2-Wegeventils 246 über die defekte pneumatische Bremsleitung 31 entlüftet und das pneumatische Bremssignal am Steuereingang des 2/2-Wegeventils 246 bewirkt dessen Umschaltung. Der Druckluftspeicher 13 wird abgesperrt und über das geschaltete Anhängersteuerventil 228 und die defekte Bremsleitung 31 die Vorratsleitung 17 schlagartig entlüftet mit der Folge der Aktivierung des Notbremsventils der Anhängerbremseinrichtung.

Bei angekuppeltem Anhänger mit elektrisch steuerbarer Anhängerbremseinrichtung ist neben der Vorratsleitung 17 noch die elektrische Bremsleitung 27 zu stecken. Die in dem Anschlußstecker 26 eingesteckte Bremsleitung 27 signalisiert der Steuerelektronik 21 die elektrisch steuerbare Anhängerbremseinrichtung, so daß die Steuerelektronik 21 mit jedem Bremssignal ein Schaltsignal für das 2/2-Wegemagnetventil 248 generiert und dieses umschaltet. Bei nicht angeschlossener pneumatischer Bremsleitung 31 ist der Rückleitungsanschluß 242 des Bremskupplungskopfes 229 stets entlüftet und wird durch das umgeschaltete 2/2-Wegemagnetventil 248 abgesperrt. Ein pneumatisches Bremssignal vom Bremswertgeber 23 wirkt einerseits auf den Steuereingang des 2/2-Wegeventils 246 und andererseits auf den Steuereingang des Anhängersteuerventils 228. Letzteres steuert wiederum einen Bremssteuerdruck in den Bremskupplungskopf 229 ein, dessen Bremsleitungsanschluß 241 durch das nicht geöffnete Ventil abgeschlossen ist.

Der Bremssteuerdruck gelangt auf den Rücksetzeingang 247 des 2/2-Wegeventils 246 und verhindert dessen Umschaltung durch das pneumatische Bremssignal. Die Anhängerbremseinrichtung wird durch das von der Steuerelektronik 21 erzeugte elektrische Bremssignal elektrisch angesteuert. Reißt die elektrische Bremsleitung 27, so wird das 2/2-Wegemagnetventil 248 auf ein Ausgangssignal des elektrischen Bremswertgebers 22 hin nicht mehr geschaltet. Damit ist der Rücksetzeingang 247 des 2/2-Wegeventils 246 über den Rückleitungsanschluß 242 des Bremskupplungskopfes 229 entlüftet. Das pneumatische Bremssignal des pneumatischen Bremswertgebers 23 schaltet das 2/2-Wegeventil 246 um, und der Druckluftspeicher 13 wird abgesperrt. Die Vorratsleitung 17 wird bei geschaltetem Anhängersteuerventil 228 über den Bypaß 249 und den Ruckleitungsanschluß 242 des Bremskupplungskopfes 229 schlagartig entlüftet und damit das Notbremsprogramm gestartet.

Bei einem angekuppelten Anhänger, dessen Anhängerbremseinrichtung sowohl elektrisch als auch pneumatisch steuerbar ist, sind neben der Vorratsleitung 17 sowohl die elektrische Bremsleitung 27 als auch die pneumatische Bremsleitung 31 an das Zugfahrzeug angeschlossen. Durch Belegen des Anschlußsteckers 26 wird der Steuerelektronik 21 eine elektrisch steuerbare Anhängerbremseinrichtung und durch Belegen des Bremskupplungskopfes 229 der Notbremsauslösevorrichtung 233 eine pneumatisch steuerbare Anhängerbremseinrichtung signalisiert. Solange alle Bremsleitungen 27, 31 intakt sind, gelangt an die Anhängerbremseinrichtung sowohl ein elektrisches Bremssignal als auch der von dem Anhängerbremsventil 228 eingesteuerte Bremssteuerdruck. Die elektrische Steuerung hat jedoch dabei den Vorrang. Reißt die elektrische Bremsleitung 27 oder ist die Steuerelektronik 21 defekt, so wird das 2/2-Wegemagnetventil 248 nicht mehr geschaltet,und der Rücksetzeingang 247 des 2/2-Wegeventils 246 ist ständig über den Bypaß 249 mit dem Rückleitungsanschluß 242 des Bremskupplungskopfes 229 verbunden. Da jedoch die pneumatische Bremsleitung 31 angeschlossen ist, ist der Rückleitungsanschluß 242 mit dem Bremsleitungsanschluß 241 verbunden. Das bei jeder Bremspedalbetätigung von dem pneumatischen Bremswertgeber 23 generierte pneumatische Bremssignal bewirkt eine Umschaltung des Anhängersteuerventils 228 und eine Einsteuerung eines Bremssteuerdruckes über die pneumatische Bremsleitung 31 in die Anhängersteuereinrichtung. Der Steuereingang des 2/2-Wegeventils 246 ist durch den am Rücksetzeingang 247 liegenden Bremssteuerdruck blockiert. Bei defekter elektrischer Bremsleitung 27 wird der Fahrbetrieb des Zuges mit pneumatisch gesteuerter Anhängerbremseinrichtung aufrecht erhalten. Erst wenn auch die pneumatische Bremsleitung 31 defekt wird, wird die Notbremsung des Anhängers ausgelöst, da der Rücksetzeingang 247 des 2/2-Wegeventils 246 über den Bremsleitungsanschluß 241 und die defekte Bremsleitung 31 entlüftet wird und damit die Blockierung des Steuereingangs des 2/2-Wegeventils 246 aufgehoben ist und die Vorratsleitung 17 über das geschaltete Anhängersteuerventil 228 und den Bremsleitungsanschluß 241 an der defekten Bremsleitung entlüftet wird.

Die in Fig. 5 ausschnittweise dargestellte Bremsanlage für einen Lastkraftwagen stimmt im Aufbau weitgehend mit der in Fig. 4 dargestellten Bremsanlage für eine Sattelzugmaschine überein. Hier ist ein üblicher Bremskupplungskopf 329 vorgesehen, der stets offen ist und auch bei nicht angeschlossener pneumatischer Bremsleitung 31 nicht geschlossen wird. Im Unterschied zu Fig. 4 ist das 2/2-Wegemagnetventil 348 unmittelbar in die Verbindungsleitung zwischen Anhängersteuerventil 328 und Bremskupplungskopf 329 eingeschaltet. Das 2/2-Wegemagnetventil 348 weist zwei pneumatische Rücksetzeingänge 250,251 auf, die mit dem Eingang bzw. Ausgang des 2/2-Wegemagnetventils 348 verbunden sind. Die Funktionsweise dieser Zugwagenbremsanlage stimmt mit der in Fig. 1 dargestellten Zugwagenbremsanlage überein. Bei elektrisch gesteuerter Anhängerbremseinrichtung und damit nicht angeschlossener pneumatischer Bremsleitung 31 wird mit jedem von der Steuerelektronik 21 auf ein Ausgangssignal des elektrischen Bremswertgebers 22 hin generiertes Steuersignal das 2/2-Wegemagnetventil 348 umgeschaltet und sperrt den offenen Bremskupplungskopf 329 ab, so daß die Vorratsleitung 17 über das geschaltete Anhängersteuerventil 328 nicht entlüftet werden kann und auch der Steuereingang des 2/2-Wegeventils 346 blockiert bleibt. Damit wird die Druckluftversorgung der Anhängerbremseinrichtung über die Vorratsleitung 17 aufrecht erhalten.

In Fig. 6 ist links schematisch die Zugwagenbremsanlage mit der mehrkreisigen Zugwagenbremse 60, der Steuerelektronik 21 und dem Bremspedal 24 mit gekoppelten elektrischen und pneumatischen Bremswertgebern 22,23 dargestellt. Rechts im Bild ist die Anhängerbremseinrichtung mit Anhängerbremse 61 und Anhängersteuergerät 62 mit daran angeschlossenem Kennsignalspeicher 63 dargestellt. Mit 15 ist wiederum der die Druckluftversorgungsleitung 14 abschließende Vorratskupplungskopf bezeichnet, an dem mittels des Kupplungskopfes 16 die Vorratsleitung 17 zur Anhängerbremseinrichtung angeschlossen ist. Mit 29 ist der Bremskupplungskopf bezeichnet, an welchen die pneumatische Bremsleitung 31 mittels des Kupplungskopfes 30 angeschlossen ist. Außerdem ist ein mehrpoliges elektrisches Kupplungsstück 64 mit einem Steckteil 65 und einem Aufnahmeteil 66 vorgesehen. Das Aufnahmeteil 66 ist über eine zugwagenseitige mehradrige Signalleitung 67 mit der Steuerelektronik 21 und das Steckteil 65 über eine anhängerseitige mehradrige Signalleitung 68 mit dem Anhängersteuergerät 62 verbunden. Einen der Signalwege in den Signalleitungen 67,68 stellt die elektrische Bremssignalleitung zur Übertragung eines elektrischen Bremssignals von der Steuerelektronik 21 zu dem Anhänger-Steuergerät 62 dar. Über einen weiteren Signalweg in den Signalleitungen 67,68 werden von dem Anhänger-Steuergerät 62 zu der Steuerelektronik 21 Kennsignale übertragen, welche den jeweiligen Typ der Anhängerbremseinrichtung kennzeichnen, z.B. pneumatisch steuerbare Anhängerbremseinrichtung, elektrisch steuerbare Anhängerbremseinrichtung mit oder ohne pneumatischen Rückhaltekreis, elektrisch und pneumatisch steuerbare Anhängerbremseinrichtung mit oder ohne Antiblokkiersystem etc. Diese den Typ der Anhängerbremseinrichtung charakterisierenden Kennsignale sind in dem Kennsignalspeicher 63 in Form von kodierten Digitalwörtern abgespeichert. Mit Herstellen der elektrischen Verbindung im Kupplungsstück 64 meldet das Anhänger-Steuergerät 62 das Kennsignal an das Steuergerät 21. Solange das Anhänger-Steuergerät 62 elektrisch mit der Steuerelektronik 21 verbunden bleibt, kennt die Zugwagenbremsanlage den Ausrüstungsstand oder Ausrüstungsgrad der Anhängerbremseinrichtung, so daß bei Vorliegen von Fehlern spezifische, auf den Typ der Anhängerbremseinrichtung abgestimmte Notbremsprogramme gestartet werden können. Wie beschrieben, werden die Kennsignale auf einem von dem Bremssignalweg getrennten Signalweg dem Steuergerät 21 zugeführt. Es ist auch möglich, den Bremssignalweg selbst zur Übertragung der Kennsignale zu benutzen. Hierzu wird ein Signalweg der Signalleitungen 67,68 als bidirektionale Leitung verwendet, auf welcher in der einen Richtung von der Steuerelektronik 21 zum Steuergerät 62 die elektrischen Bremssignale und entgegengesetzt die Kennsignale übertragen werden. Die weiteren elektrischen Verbindungswege in den mehradrigen Signalleitungen 67,68 dienen der Stromversorgung der Anhängerbremseinrichtung und weiteren Steuerfunktionen. Zusätzlich zur Betriebsbremsanlage können auch die Signale der Feststellbremse über die pneumatische und/oder elektrische Schnittstelle zwischen Zugfahrzeug und Anhänger übertragen werden.

**Patentansprüche**

1.  Elektro-pneumatische Bremsanlage für Zugfahrzeuge, wie Lastkraftwagen oder Sattelzugmaschinen, die mit pneumatisch und/oder elektrisch steuerbaren und pneumatisch betätigbaren Bremseinrichtungen aufweisenden Anhängern kuppelbar sind, mit mindestens zwei voneinander unabhängig wirkenden, mittels eines Bremspedals (24) ansteuerbaren Betätigungskreisen zum Steuern wenigstens eines Druckluftversorgungskreises zu mehreren Radbremszylindern (18) des Zugfahrzeuges, von denen mindestens ein Betätigungskreis ein elektrischer ist und einen mit dem Bremspedal (24) gekoppelten elektrischen Bremswertgeber (22) und eine mit diesem verbundene Steuerelektronik (21) aufweist, mit einem mit einem Druckluftspeicher (13) in Verbindung stehenden Vorratskupplungskopf (15; 315) zum Anschließen einer Vorratsleitung (17) zur Anhängerbremseinrichtung, mit einem Bremskupplungskopf (29; 129; 229; 329) zum Anschließen einer pneumatischen Bremsleitung (31) zur Anhängerbremseinrichtung, mit einem elektrischen Anschlußstecker (26; 64) zum Anschließen einer elektrischen Bremsleitung (27) zur Anhängerbremseinrichtung und mit einer Notbremsauslösevorrichtung (33; 133; 233; 333), die im Falle von Unterbrechungen vom zum Anhänger führenden Bremsleitungen (27, 31) durch bei Bremspedalbetätigung generierte elektrische und/oder pneumatische Bremssignale aktivierbar ist und die Notbremsung des Anhängers steuert, **gekennzeichnet durch** mit Anhängerankopplung aktivierbare Mittel (26, 29; 129; 229; 329; 64), welche die Anhängerbremseinrichtung als pneumatisch und/oder elektrisch steuerbar ausweisende Kennsignale generieren, und durch Verknüpfung der Kennsignale mit den elektrischen und/oder pneumatischen Bremssignalen derart, daß die Aktivierung der Notbremsauslösevorrichtung (33; 133; 233; 333) von den Kennsignalen abhängig ist.

2.  Bremsanlage nach Anspruch 1, **dadurch gekennzeichnet**, daß die Kennsignalgenerierungsmittel von dem elektrischen Anschlußstecker (26) gebildet sind, der für eingesteckte bzw. nicht eingesteckte elektrische Bremsleitung (27) charakteristische elektrische Kennsignale ausgibt, und daß die Steuerelektronik (21) eine die elektrischen Bremssignale und die elektrischen Kennsignale verknüpfende Logik (35) aufweist.

**3.** Bremsanlage nach Anspruch 1, **dadurch gekennzeichnet**, daß die Kennsignalgenerierungsmittel von dem Bremskupplungskopf (29; 129;229;329) gebildet sind, der zumindest bei jeder Bremspedalbetätigung für die angeschlossene bzw. nicht angeschlossene pneumatische Bremsleitung (31) charakteristische pneumatische Kennsignale ausgibt, und daß die Verknüpfung von pneumatischen Kennsignalen und pneumatischen Bremssignalen in der Notbremsauslösevorrichtung (33;133;233;333) selbst erfolgt.

**4.** Bremsanlage nach einem der Ansprüche 1 - 3, **dadurch gekennzeichnet**, daß ein einerseits mit dem Druckluftspeicher (13) und andererseits mit dem Vorrats- und Bremskupplungskopf (16,29;129;229;329) verbundenes, von den pneumatischen Bremssignalen gesteuertes, an sich bekanntes Anhängersteuerventil (28;128;228;328) zum Einsteuern eines Steuerbremsdruckes in den Bremskupplungskopf (29;129;229;329) Teil der Notbremsauslösevorrichtung (33;133;233;333) ist und diese zusätzlich ein elektrisch und pneumatisch steuerbares Notentlüftungsventil (34;134;234;334) zum Absperren des Druckluftspeichers (13) und zum Schnellentlüften der Vorratsleitung (17) zur Anhängerbremseinrichtung aufweist, das über seinen pneumatischen Steuereingang umschaltbar und dessen pneumatischer Steuereigang über den elektrischen Steuereingang blockierbar ist, daß der pneumatische Steuereingang mit den pneumatischen Bremssignalen beaufschlagt und der elektrische Steuereingang mit der Steuerelektronik (21) verbunden ist und daß die Steuerelektronik (21) derart ausgebildet ist, daß sie nur bei ungestörtem elektrischen Signalweg zum Anschlußstecker (26) und vom Anschlußstecker (26) zur Anhängerbremseinrichtung auf jedes Ausgangssignal des elektrischen Bremswertgebers (22',23') hin ein Bremssignal an den Anschlußstecker (26) legt.

**5.** Bremsanlage nach Anspruch 4, **dadurch gekennzeichnet**, daß das Notentlüftungsventil (34;134) ein pneumatisch gesteuertes 3/2-Wegeventil (36;136) mit Rückstellung, von dessen drei Arbeitsanschlüssen einer mit dem Vorratskupplungskopf (15) und einer mit dem Anhängersteuerventil (28;128) verbunden und einer entlüftet ist, und ein 3/2-Wegemagnetventil (37;137) mit Rückstellung aufweist, von dessen drei Arbeitsanschlüssen einer mit dem Steuereingang des 3/2-Wegeventils (36;136) verbunden, einer mit den pneumatischen Bremssignalen belegt und einer entlüftet ist, und daß der elektrische Steuereingang des 3/2-Wegemagnetventils (37;137) mit der Steuerelektronik (21) verbunden ist.

**6.** Bremsanlage nach Anspruch 2 und 5, **dadurch gekennzeichnet**, daß die Steuerelektronik (21) einen Anschluß (38) aufweist, dessen Potential für die Dauer eines elektrischen Bremssignals von logisch L auf logisch H wechselt, daß das Kennsignal logisch H die gesteckte und das Kennsignal logisch L die nicht gesteckte Bremsleitung (27) kennzeichnet und daß die Logik (35) ein OR-Gatter (39) aufweist, dessen einer Eingang mit dem Anschluß (38) der Steuerelektronik (21) verbunden, dessen anderer Eingang mit den negierten Kennsignalen belegt und dessen Ausgang mit dem elektrischen Steuereingang des 3/2-Wegemagnetventils (37) verbunden ist.

**7.** Bremsanlage nach Anspruch 6, **dadurch gekennzeichnet**, daß zwischen dem OR-Gatter (39) und dem elektrischen Steuereingang des 3/2-Wegemagnetventils (37) ein AND-Gatter (40) eingeschaltet ist, dessen einer Eingang an dem Ausgang des OR-Gatters (39) angeschlossen, dessen anderer Eingang mit dem elektrischen Bremsignal belegt und dessen Ausgang mit dem Steuereingang des 3/2-Wegemagnetventils (37) verbunden ist, und daß das Ausgangssignal des elektrischen Bremswertgebers (22) bei Bremspedalbetätigung logisch H ist.

**8.** Bremsanlage nach Anspruch 6 oder 7, **dadurch gekennzeichnet**, daß das pneumatisch gesteuerte 3/2-Wegeventil (136) zusätzlich einen pneumatischen Rücksetzeingang (143) aufweist, der von den pneumatischen Kennsignalen beaufschlagt ist.

**9.** Bremsanlage nach Anspruch 5, **dadurch gekennzeichnet**, daß das pneumatisch gesteuerte 3/2-Wegeventil (136) zusätzlich einen pneumatischen Rücksetzeingang (143) aufweist, der von den pneumatischen Kennsignalen beaufschlagt ist,und daß der elektrische Steuereingang des 3/2-Wegemagnetventils (137) derart mit der Steuerelektronik (21) verbunden ist, daß mit jedem elektrischen Bremssignal ein Schaltsignal ansteht.

**10.** Bremsanlage nach Anspruch 3 und 4, **dadurch gekennzeichnet**, daß das Notentlüftungsventil (234) ein zwischen Druckluftspeicher (13) und Vorratskupplungskopf (15) eingeschaltetes pneumatisches 2/2-Wegeventil (246) mit Rückstellung und pneumatischem Rücksetzeingang (247) und ein zwischen dem Anhängersteuerventil (228) und dem Bremskupplungskopf (229) eingeschaltetes 2/2-Wegemagnetventil (248) mit Rückstellung aufweist, dessen Steuereingang derart mit der Steuerelektronik (21) verbunden ist, daß mit jedem elektrischen Bremssignal ein Schaltsignal ansteht, und daß die pneumatischen Bremssignale an dem Steuereingang des 2/2-Wegeventils (248) liegen und die pneumatischen Kennsignale über das ungeschaltete 2/2-Wegemagnetventil (248) den Rücksetzeingang (247) des 2/2-Wegeventils (246) beaufschlagen.

11. Bremsanlage nach einem der Ansprüche 8 - 10, **dadurch gekennzeichnet**, daß der Bremskupplungskopf (229) einen mit dem Anhängersteuerventil (228) verbundenen Bremsleitungsanschluß (241), einen Rückleitungsanschluß (242) und ein durch Anschließen der pneumatischen Bremsleitung (31) selbsttätig öffnendes Ventil aufweist, das in seiner Schließstellung den Bremsleitungsanschluß (241) absperrt und den Rückleitungsanschluß (242) entlüftet und in seiner Offenstellung den Bremsleitungsanschluß (241) öffnet und den Rückleitungsanschluß (242) mit dem Bremsleitungsanschluß (241) verbindet, und daß durch über das 2/2-Wegemagnetventil (248) geführten Anschluß des Rückleitungsanschlusses (242) einerseits und durch Anschluß des Rücksetzeingangs (247) des pneumatisch steuerbaren 2/2-Wegeventils (246) andererseits an den Ausgang des Anhängersteuerventils (228) die Beaufschlagung des Rücksetzeingangs (247) des pneumatisch steuerbaren 2/2-Wegeventils (246) mit den pneumatischen Kennsignalen bewirkt ist.

12. Bremsanlage nach Anspruch 3 und 4, **dadurch gekennzeichnet**, daß das Notentlüftungsventil (334) ein zwischen Druckluftspeicher (13) und Vorratskupplungskopf (315) eingeschaltetes pneumatisch gesteuertes 2/2-Wegeventil (346) mit Rückstellung und pneumatischem Rücksetzeingang (347) und ein in die Verbindung zwischen Anhängersteuerventil (328) und Bremskupplungskopf (329) eingeschaltetes 2/2-Wegeventil (348) mit mindestens einem an seinem Ein- oder Ausgang angeschlossenen pneumatischen Rücksetzeingang (350,351) aufweist, daß der elektrische Steuereingang des 2/2-Wegemagnetventils (348) derart mit der Steuerelektronik (21) verbunden ist, daß mit jedem elektrischen Bremssignal ein Schaltsignal ansteht, und daß die pneumatischen Bremssignale an dem Steuereingang des 2/2-Wegeventils (346) liegen und die pneumatischen Kennsignale über das ungeschaltete 2/2-Wegemagnetventil (348) den Rücksetzeingang (347) des 2/2-Wegeventils (346) beaufschlagen.

13. Bremsanlage nach Anspruch 12, **dadurch gekennzeichnet**, daß der Bremskupplungskopf (329) über das 2/2-Wegemagnetventil (348) mit dem Ausgang des Anhängersteuerventils (328) verbunden und derart ausgebildet ist, daß er bei nicht angeschlossener pneumatischer Bremsleitung (31) entlüftet ist, und daß durch Anschluß des Rücksetzeingangs (347) des 2/2-Wegeventils (346) an den Ausgang des Anhängersteuerventils (328) dessen Beaufschlagung mit den pneumatischen Kennsignalen bewirkt ist.

14. Bremsanlage nach Anspruch 1, **dadurch gekennzeichnet**, daß die Kennsignalgenerierungsmittel von einer bei Anhängerankupplung zu schließenden elektrischen Signalleitung (64 - 68) gebildet sind, die einerseits mit der Steuerelektronik (21) und andererseits mit einem Steuergerät (62) der Anhängerbremseinrichtung verbunden ist.

15. Bremsanlage nach Anspruch 14, **dadurch gekennzeichnet**, daß das Steuergerät (62) einen Kennsignalspeicher (63) aufweist, in dem die Kennsignale als kodierte Digitalwörter abgespeichert sind.

16. Bremsanlage nach einem der Ansprüche 1 - 15, **dadurch gekennzeichnet**, daß die pneumatischen Bremssignale die Ausgangssignale eines mit dem Bremspedal (24) gekoppelten pneumatischen Bremswertgebers (23) in einem pneumatischen Betätigungskreis sind.

## Claims

1. Electro-pneumatic brake system for traction vehicles, such as lorries or semi-trailer tractors, which can be connected to trailers with brake devices which can be controlled pneumatically and/or electrically and can be actuated pneumatically, having at least two mutually independently effective actuation circuits, which can be triggered by means of a brake pedal (24), for controlling at least one compressed air supply circuit to a plurality of wheel brake cylinders (18) of the traction vehicle, of which actuation circuits at least one is an electrical circuit and has an electrical braking rate detector (22) connected to the brake pedal (24) and control electronics (21) connected to this electrical braking rate detector (22), having a supply coupling head (15; 315), connected to a compressed air reservoir (13), for connecting a

EP 0 278 228 B1

supply line (17) to the trailer brake device, having a brake coupling head (29; 129; 229; 329) for connecting a pneumatic brake line (31) to the trailer brake device, having an electrical connecting plug (26; 64) for connecting an electrical brake line (27) to the trailer brake device and having an emergency brake initiation appliance (33; 133; 233; 333) which, in the case of breaks in the brake lines (27, 31) leading to the trailer, can be activated by electrical and/or pneumatic brake signals generated on actuation of the brake pedal and controls the emergency braking of the trailer, characterised by means (26, 29; 129; 229; 329; 64), which can be activated on connection of the trailer, which means generate identification signals identifying the trailer brake device as being controllable pneumatically and/or electrically, and characterised by association of the identification signals with the electrical and/or pneumatic brake signals in such a way that the activation of the emergency brake initiation appliance (33; 133; 233; 333) depends on the identification signals.

2.  Brake system according to Claim 1, characterised in that the identification signal generation means are formed by the electrical connecting plug (26), which emits electrical identification signals characteristic of an inserted or non-inserted electrical brake line (27), and in that the control electronics (21) have a logic circuit (35) associating the electrical brake signals and the electrical identification signals.

3.  Brake system according to Claim 1, characterised in that the identification signal generation means are formed by the brake coupling head (29; 129; 229; 329) which, at least on each brake pedal actuation, emits pneumatic identification signals characteristic of the connected or non-connected pneumatic brake line (31), and in that the association of pneumatic identification signals and pneumatic brake signals takes place in the emergency brake initiation appliance (33; 133; 233; 333) itself.

4.  Brake system according to one of Claims 1-3, characterised in that a trailer control valve (28; 128; 228; 328), known per se, connected, on the one hand, to the compressed air reservoir (13) and, on the other hand, to the supply coupling head and brake coupling head (16, 29; 129; 229; 329) and controlled by the pneumatic brake signals, and intended for inserting a control brake pressure into the brake coupling head (29; 129; 229; 329), is part of the emergency brake initiation appliance (33; 133; 233; 333) and the latter also has an electrically and pneumatically controllable emergency ventilation valve (34; 134; 234; 334) for shutting off the compressed air reservoir (13) and for the rapid ventilation of the supply line (17) to the trailer brake device, which emergency ventilation valve (34; 134; 234; 334) can be switched over by means of its pneumatic control input and its pneumatic control input can be blocked by means of the electrical control input, and in that the pneumatic control input is subjected to the pneumatic brake signals and the electrical control input is connected to the control electronics (21) and in that the control electronics (21) are configured in such a way that they only apply a brake signal to the connecting plug (26) on each output signal of the electrical braking rate detector (22', 23') when the electrical signal path to the connecting plug (26) and from the connecting plug (26) to the trailer brake device is in order.

5.  Brake system according to Claim 4, characterised in that the emergency ventilation valve (34; 134) has a pneumatically controlled 3/2-way valve (36; 136) with reset, of whose three operational connections, one is connected to the supply coupling head (15), one is connected to the trailer control valve (28; 128) and one is ventilated, and has a 3/2-way solenoid valve (37; 137) with reset, of whose three operational connections, one is connected to the control input of the 3/2-way valve (36; 136), one is occupied by the pneumatic brake signals and one is ventilated, and in that the electrical control input to the 3/2-way solenoid valve (37; 137) is connected to the control electronics (21).

6.  Brake system according to Claims 2 and 5, characterised in that the control electronics (21) have a connection (38) whose potential changes for the duration of an electrical brake signal from logic L to logic H, in that the identification signal logic H characterises the inserted brake line (27) and the identification signal logic L characterises the non-inserted brake line (27) and in that the logic circuit (35) has an OR gate (39), one of whose inputs is connected to the connection (38) of the control electronics (21), its other input is occupied by the negated identification signals and its output is connected to the electrical control input of the 3/2-way solenoid valve (37).

7.  Brake system according to Claim 6, characterised in that an AND gate (40) is inserted between the OR gate (39) and the electrical control input of the 3/2-way solenoid valve (37), one input of which AND gate (40) is connected to the output of the OR gate (39), the other input of which AND gate (40) is

13

occupied by the electrical brake signal and the output of which AND gate (40) is connected to the control input of the 3/2-way solenoid valve (37), and in that the output signal of the electrical braking rate detector (22) is logic H in the case of brake pedal actuation.

8. Brake system according to Claim 6 or 7, characterised in that the pneumatically controlled 3/2-way valve (136) additionally has a pneumatic reset input (143) which is subjected to the pneumatic identification signals.

9. Brake system according to Claim 5, characterised in that the pneumatically controlled 3/2-way valve (136) has, in addition, a pneumatic reset input (143) which is subjected to the pneumatic identification signals and in that the electrical control input of the 3/2-way solenoid valve (137) is connected to the control electronics (21) in such a way that a switching signal is present with each electrical brake signal.

10. Brake system according to Claims 3 and 4, characterised in that the emergency ventilation valve (234) has a pneumatic 2/2-way valve (246) with reset and pneumatic reset input (247) inserted between the compressed air reservoir (13) and the supply coupling head (15) and a 2/2-way solenoid valve (248) with reset inserted between the trailer control valve (228) and the brake coupling head (229), the control input of which 2/2-way solenoid valve (248) is connected to the control electronics (21) in such a way that a switching signal is present with each electrical brake signal, and in that the pneumatic brake signals are applied to the control input of the 2/2-way valve (248) and the pneumatic identification signals act on the reset input (247) of the 2/2-way valve (246) via the unswitched 2/2-way solenoid valve (248).

11. Brake system according to one of Claims 8-10, characterised in that the brake coupling head (229) has a brake line connection (241) connected to the trailer control valve (228), a return line connection (242) and a valve opening automatically on connection of the pneumatic brake line (31), which valve shuts off the brake line connection (241) and ventilates the return line connection (242) in its closed position and opens the brake line connection (241) and connects the return line connection (242) to the brake line connection (241) in its open position and in that the application of the pneumatic identification signals to the reset input (247) of the pneumatically controllable 2/2-way valve (246) is effected by connection of the return line connection (242) led via the 2/2-way solenoid valve (248), on the one hand, and by connection of the reset input (247) of the pneumatically controllable 2/2-way valve (246), on the other hand, to the output of the trailer control valve (228).

12. Brake system according to Claims 3 and 4, characterised in that the emergency ventilation valve (334) has a pneumatically controlled 2/2-way valve (346) with reset and pneumatic reset input (347) inserted between the compressed air reservoir (13) and the supply coupling head (315) and a 2/2-way valve (348) with at least one pneumatic reset input (350, 351) connected at its input or output inserted in the connection between the trailer control valve (328) and the brake coupling head (329), in that the electrical control input of the 2/2-way solenoid valve (348) is connected to the control electronics (21) in such a way that a switching signal is present with each electrical brake signal, and in that the pneumatic brake signals are present at the control input of the 2/2-way valve (346) and the pneumatic identification signals act on the reset input (347) of the 2/2-way valve (346) via the unswitched 2/2-way solenoid valve (348).

13. Brake system according to Claim 12, characterised in that the brake coupling head (329) is connected to the output of the trailer control valve (328) via the 2/2-way solenoid valve (348) and is configured in such a way that it is ventilated when no pneumatic brake line (31) is connected and in that the application of the pneumatic identification signals to the trailer control valve (328) is effected by connection of the reset input (347) of the 2/2-way valve (346) to the output of the trailer control valve (328).

14. Brake system according to Claim 1, characterised in that the identification signal generation means are formed by an electrical signal line (64-68) which has to be closed when the trailer is connected, which electrical signal line (64-68) is connected to the control electronics (21), on the one hand, and is connected to the control unit (62) of the trailer brake device, on the other hand.

14

**15.** Brake system according to Claim 14, characterised in that the control unit (62) has an identification signal memory (63) in which the identification signals are stored as coded digital words.

**16.** Brake system according to one of Claims 1-15, characterised in that the pneumatic brake signals are the output signals of a pneumatic braking rate detector (23), connected to the brake pedal (24), in a pneumatic actuation circuit.

**Revendications**

**1.** Installation de freinage électro-pneumatique pour des véhicules de traction, tels que des camions ou des véhicules tracteurs de semi-remorques, qui peuvent être accouplés à des remorques présentant des dispositifs de freinage pouvant être commandés pneumatiquement et/ou électriquement et pouvant être actionnés pneumatiquement, avec au moins deux circuits d'actionnement agissant indépendamment l'un de l'autre, pouvant être commandés au moyen d'une pédale de freinage (24) pour commander au moins un circuit d'alimentation en air comprimé allant aux différents cylindres de freinage de roue (18) du véhicule de traction, l'un au moins des circuits d'acheminement étant un circuit électrique et présente un détecteur électrique de la résistance de freinage (22) accouplé avec la pédale de frein (24) et une électronique de commande (21) reliée à ce détecteur, avec une tête d'accouplement de réserve (15 ; 315) se trouvant en liaison avec un réservoir d'air comprimé (13) pour raccorder un circuit de réserve (17) au dispositif de freinage de la remorque, avec une tête d'accouplement de freinage (29 ; 129 ; 229 ; 329) pour raccorder un circuit de freinage pneumatique (31) au dispositif de freinage de la remorque, avec une fiche électrique de raccordement (26 ; 64) pour raccorder un circuit électrique de freinage (27) au dispositif de freinage de la remorque et avec un dispositif de déclenchement du freinage de secours (33 ; 133 ; 233 ; 333) qui en cas de coupures des circuits de freinage (27, 31) allant à la remorque peut être activé par un signal de freinage électrique et/ou pneumatique engendré lors de l'actionnement de la pédale de freinage et commande le freinage de secours de la remorque, installation de freinage électro-pneumatique caractérisée par des moyens (26 ; 29 ; 129 ; 229 ; 329 ; 64) pouvant être activés avec l'accouplement de la remorque, moyens qui créent des signaux indicatifs présentant le dispositif de freinage de la remorque comme pouvant être commandé pneumatiquement et/ou électriquement et par la combinaison des signaux indicatifs avec les signaux de freinage électriques et/ou pneumatiques, de telle sorte que l'activation du dispositif de déclenchement du freinage de secours (33 ; 133 ; 233 ; 233) est fonction des signaux indicatifs.

**2.** Installation de freinage selon la revendication 1, caractérisée en ce que les moyens pour créer les signaux indicatifs sont formés par la fiche de raccordement électrique (26), qui délivre des signaux électriques caractéristiques du circuit électrique (27) de freinage branché ou non branché et en ce que l'électronique de commande (21) présente une logique (35) qui combine les signaux électriques de freinage et les signaux électriques indicatifs.

**3.** Installation de freinage selon la revendication 1, caractérisée en ce que les moyens pour créer des signaux indicatifs sont formés par la tête d'accouplement de freinage (29 ; 129 ; 229 ; 329), qui délivre des signaux indicatifs pneumatiques caractéristiques du moins lors de chaque actionnement de la pédale de freinage pour le circuit de freinage (31) pneumatique raccordé ou non raccordé et en ce que la combinaison des signaux pneumatiques indicatifs et des signaux pneumatiques de freinage a lieu dans le dispositif de déclenchement du freinage de secours lui-même (33 ; 133 ; 233 ; 333).

**4.** Installation de freinage selon l'une des revendications 1 à 3, caractérisée en ce qu'une soupape de commande de remorque (28 ; 128 ; 228 ; 328) connue en soi, reliée d'une part au réservoir d'air comprimé (13) et d'autre part à la tête d'accouplement de réserve et de freinage (16, 29 ; 129 ; 229 ; 329), commandée par les signaux de freinage pneumatiques, pour injecter une pression de freinage dans la tête d'accouplement de freinage (29 ; 129 ; 229 ; 329) fait partie du dispositif de déclenchement du freinage de secours (33 ; 133 ; 233 ; 333) et celui-ci présente en outre une soupape de purge d'air de secours (34 ; 134 ; 234 ; 334) pouvant être commandée électriquement et pneumatiquement pour fermer le réservoir d'air comprimé (13) et pour purger rapidement l'air du circuit de réserve (17) allant au dispositif de freinage de la remorque, soupape qui par son entrée de commande pneumatique peut être commutée et dont l'entrée de commande pneumatique peut être bloquée par l'entrée de commande électrique, en ce que l'entrée de commande pneumatique est actionnée par les signaux pneumatiques de freinage et l'entrée de commande électrique est reliée à l'électronique de commande

15

(21) et en ce que l'électronique de commande (21) est constituée de telle façon qu'elle applique un signal de freinage sur la fiche de raccordement (26), seulement par le trajet électrique de signalisation non perturbé allant à la fiche de raccordement (26) et allant de la fiche de raccordement (26) au dispositif de freinage de la remorque, sur chaque signal de sortie du détecteur électrique (22', 23') de la grandeur du freinage.

5. Installation de freinage selon la revendication 4, caractérisée ne ce que la soupape de purge d'air de secours (34 ; 134) comporte un distributeur 3/2 voies commandé pneumatiquement (36 ; 136) avec rappel, dont l'un des trois raccords de fonctionnement est relié à la tête d'accouplement de réserve (15), un autre est relié à la soupape de commande de la remorque (28 ; 128) et un autre est purgé d'air et comporte un distributeur électromagnétique 3/2 voies (37 ; 137) avec rappel, dont l'un des trois raccords de fonctionnement est relié à l'entrée de commande du distributeur 3/2 (36 ; 136), un autre reçoit les signaux pneumatiques de freinage, et un autre est purgé d'air et en ce que l'entrée électrique de commande du distributeur 3/2 voies (37 ; 137) est reliée à l'électronique de commande (21).

6. Installation de freinage selon la revendication 2 et la revendication 5, caractérisée en ce que l'électronique de commande (21) présente un raccord (38) dont le potentiel varie pour la durée d'un signal de freinage électrique de L logique à H logique, en ce que le signal indicatif H logique caractérise le circuit de freinage (127) branché et le signal indicatif L logique caractérise le circuit de freinage (27) non branché et en ce que la logique (35) présente une grille OU (39), dont une entrée est reliée au raccord (38) de l'électronique de commande (21), dont une autre entrée reçoit les signaux indicatifs logiquement inverses, et dont la sortie est reliée à l'entrée de commande électrique du distributeur 3/2 voies (37).

7. Installation de freinage selon la revendication 6, caractérisée en ce qu'entre la grille OU (39) et l'entrée électrique de commande du distributeur 3/2 voies (37) est inséré une grille ET (40), dont une entrée est raccordée à la sortie de la grille OU (39), dont une autre entrée reçoit le signal électrique de freinage et dont la sortie est reliée à l'entrée de commande du distributeur 3/2 voies (37), et en ce que le signal de sortie du détecteur de la résistance de freinage (22) lors de l'actionnement de la pédale de frein est H logique.

8. Installation de freinage selon la revendication 6 ou 7, caractérisée en ce que le distributeur 3/2 voies commandé pneumatiquement (136) présente en outre une entrée pneumatique (143) de remise à l'état initial, qui est actionnée par les signaux indicatifs pneumatiques.

9. Installation de freinage selon la revendication 5, caractérisée en ce que le distributeur 3/2 voies commandé pneumatiquement (136) présente en outre une entrée pneumatique (143) de remise à l'état initial, qui est actionnée par les signaux indicatifs pneumatiques et en ce que l'entrée électrique de commande du distributeur 3/2 voies (137) est relié à l'électronique de commande (21) de telle façon que l'on ait un signal de commutation lors de chaque signal électrique de freinage.

10. Installation de freinage selon les revendications 3 et 4, caractérisée en ce que la soupape de purge d'air de secours (234) présente un distributeur 2/2 voies pneumatique (246) avec rappel et entrée pneumatique de remise à l'état initial (247), distributeur inséré entre le réservoir d'air comprimé (13) et la tête d'accouplement de réserve (15) et un distributeur électromagnétique 2/2 voies (248), inséré entre la soupape de commande de la remorque (228) et la tête d'accouplement de freinage (229), avec rappel, dont l'entrée de commande est reliée à l'électronique de commande (21) de telle sorte que l'on ait un signal de commutation avec chaque signal électrique de freinage et en ce que les signaux pneumatiques de freinage se trouvent à l'entrée de commande du distributeur 2/2 voies (248) et les signaux pneumatiques indicatifs agissent sur l'entrée de remise à l'état initial (247) du distributeur 2/2 voies (246) via le distributeur 2/2 voies non commuté (248).

11. Installation de freinage selon l'une des revendications 8 à 10, caractérisée en ce que la tête d'accouplement de freinage (229) présente un raccord de circuit de freinage (241) relié à la soupape de commande de la remorque (228), un raccord de circuit de retour (242) et une soupape ouverte automatiquement par le raccordement du circuit de freinage pneumatique (31), qui ferme dans sa position de fermeture le raccord du circuit de freinage (241) et purge l'air du raccord de circuit de retour (242) et dans sa position ouverte ouvre le raccord de circuit de freinage (241) et relie le raccord de circuit de retour (242) au raccord de circuit de freinage (241) et en ce que l'actionnement de l'entrée de remise à l'état initial (247) du distributeur 2/2 voies pouvant être commandée pneumatiquement (246) avec les signaux indicatifs pneumatiques est provoqué par le raccordement du raccord de circuit de retour (242) via le distributeur 2/2 voies (248) d'une part et par le raccordement de l'entrée de remise à l'état initial (247) du distributeur 2/2 voies pouvant être commandée pneumatiquement d'autre part, à la sortie de la soupape de commande de la remorque (228).

12. Installation de freinage selon la revendication 3 et 4, caractérisée en ce que la soupape de purge d'air de secours (334) présente un distributeur 2/2 voies commandé pneumatiquement (346), insérée entre le réservoir d'air comprimé (13) et la tête d'accouplement de réserve (315), avec retour et entrée de remise à l'état initial (347), et un distributeur 2/2 voies (348) inséré dans la liaison entre la soupape de commande de la remorque (328) et la tête d'accouplement de freinage (329), avec au moins une entrée de remise à l'état initial (350, 351) pneumatique, raccordé à son entrée ou sa sortie, en ce que l'entrée électrique de commande du distributeur 2/2 voies (348) est reliée à l'électronique de commande (21) de telle façon que l'on ait un signal de commutation avec chaque signal électrique de freinage, et en ce que les signaux pneumatiques de freinage se trouvent à l'entrée de la commande du distributeur 2/2 voies (346) et les signaux pneumatiques indicatifs agissent via le distributeur 2/2 voies (348) sur l'entrée de remise à l'état initial (347) du distributeur 2/2 voies (346).

13. Installation de freinage selon la revendication 12, caractérisée ne ce que la tête d'accouplement de freinage (329) est reliée via le distributeur 2/2 voies (348) à la sortie de la soupape de commande de la remorque (328) et est constitué de telle façon qu'il soit purgé d'air quand le circuit de freinage (31) pneumatique n'est pas branché et en ce que l'actionnement de la soupape de commande de la remorque (328) par les signaux pneumatiques indicatifs est provoqué par le raccordement de l'entrée de remise à l'état initial (347) du distributeur 2/2 voies (346) à la sortie de la soupape de commande de la remorque (328).

14. Installation de freinage selon la revendication 1, caractérisée en ce que les moyens de création de signaux indicatifs sont formés par un circuit de signalisation (64-68) électrique à fermer lors de l'accouplement de la remorque, qui d'une part est relié à l'électronique de commande (21) et d'autre part à un appareil de commande (62) du dispositif de freinage de la remorque.

15. Installation de freinage selon la revendication 14, caractérisée en ce que l'appareil de commande (62) présente une mémoire, les signaux indicatifs (63), dans laquelle sont stockés les signaux indicatifs sous la forme de données numériques codées.

16. Installation de freinage selon l'une des revendications 1 à 15, caractérisée en ce que les signaux de freinage pneumatiques sont les signaux de sortie d'un détecteur de la grandeur de freinage pneumatique (23), couplé à la pédale de frein (24), dans un circuit d'actionnement pneumatique.

Fig.1

Fig. 2

Fig. 3

Fig.4

Fig.5

20

Fig.6